# EUROPEAN PATENT APPLICATION

(11) **EP 4 675 100 A1**
(43) Date of publication of application: **07.01.2026**
(21) Application number: 25183709.2
(22) Date of filing: 18.06.2025
(51) Int. Cl.: F03D 7/02, F03D 13/25, F03D 17/00, F03D 80/40

(54) **A METHOD AND SYSTEM OF CONTROLLING A LOADING ON A WIND TURBINE SUPPORT STRUCTURE**

(30) Priority: 02.07.2024 DK PA202470186
(71) Applicant: Vattenfall AB, 169 92 Stockholm (SE)
(72) Inventor: BRØCHNER, Jacob Kierkegaard, 8700 Horsens (DK); HENDRIKSE, Hayo, 2643 NB Pijnacker (NL)
(74) Representative: Zacco Denmark A/S

(57) **Abstract**

A method of controlling a loading on a wind turbine support structure, the wind turbine support structure comprising a wind turbine, wherein the method of controlling the loading comprises the following steps, obtaining one or more first parameters, wherein the one or more first parameters are related to sea ice, estimating a sea ice loading based on the obtained one or more first parameters, obtaining one or more second parameters, wherein the one or more second parameters are related to structural loading of the wind turbine created by a wind force, estimating a wind turbine loading based on the one or more second parameters, calculating the loading on the wind turbine support structure, wherein the calculation is based on a combination of the sea ice loading and the wind turbine loading, determining if the calculated loading on the wind turbine support structure is within a predetermined loading threshold, and controlling the wind turbine if the calculated loading on the wind turbine support structure is determined to be above the predetermined loading threshold.

## Description

### Technical Field

The invention relates to a method and system for reducing design load requirements of offshore wind turbine support structures.

### Background art

Wind turbine support structures are critical components in the construction of a wind turbine. The wind turbine support structures are dimensioned to not only support and stabilize the wind turbine, but also withstand mechanical loading during the lifetime of the turbine. The wind turbine structures of wind turbines are subjected to significant loading, such as a moment of force, during operation. The loading on the wind turbine support structures is heavily affected by the incoming wind, and especially when the wind turbine is in operation and harvests energy from the wind.

The design requirements of wind turbine support structure are therefore formulated in such way the wind turbine support structure can handle a maximum expected loading during its lifetime. The Maximum expected loading is in general heavily influenced by the incoming wind at the location, but is also heavily influenced by waves impacting the support structure and the occurrence of sea ice in cold climate areas.

As mentioned above, are wind turbine support structures dimensioned according to a maximum expected loading, which in areas with the possibility of sea ice is significantly higher. The possibility of sea ice is therefore mitigated by either over-dimensioning the wind turbine support structure compared to accommodate the additional load caused by sea ice, or to modify the geometry of the wind turbine support structure to break and divert the incoming sea ice away from the wind turbine support structures.

These solutions however, are very costly, complex, and time consuming. An improved solution for mitigating loading on wind turbine support structures is therefore required in areas where sea ice presence is a possibility.

In US 2015/0056072 systems and methods for preventing excessive loading on a wind turbine are disclosed. The method includes: measuring an actual wind parameter upwind from the wind turbine using one or more sensors; providing the measured wind parameter to a processor; providing a plurality of wind turbine operating data to the processor; utilizing the plurality of operating data to determine an estimated wind turbine condition at the wind turbine; generating a control wind profile based on the actual wind parameter and the estimated wind turbine condition; and, implementing a control action based on the control wind profile to prevent excessive loading from acting on the wind turbine

### Summary

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

It is an objective of the invention to address one or more of the disadvantages of the prior-art. It is a further object of the present invention to reduce the loading on wind turbine support structures. It is a further object of the present invention to relax the design requirements of wind turbine support structures.

Thus, disclosed herein in a first aspect of the invention is a method of controlling a loading on a wind turbine support structure, the wind turbine support structure comprising a wind turbine, wherein the method of controlling the loading comprises the following steps, obtaining one or more first parameters, wherein the one or more first parameters are related to sea ice, estimating a sea ice loading based on the obtained one or more first parameters, obtaining one or more second parameters, wherein the one or more second parameters are related to structural loading of the wind turbine created by a wind force, estimating a wind turbine loading based on the one or more second parameters, calculating the loading on the wind turbine support structure, wherein the calculation is based on a combination of the sea ice loading and the wind turbine loading, in accordance with a determination that the calculated loading on the wind turbine support structure is above a predetermined loading threshold, adjusting wind turbine operational parameters.

In accordance with a determination that the calculated loading on the wind turbine support structure is within a predetermined loading threshold, forgoing adjusting the wind turbine operational parameters.

By loading is meant mechanical loading on structural elements.

By a wind turbine is meant a power generation device converting energy yielded from incoming wind to electrical energy. The wind turbine may have a vertical or horizontal rotor comprising one or more blades. The wind turbine may comprise at least one generator which may have a different rotational speed than the rotational speed of the rotor, which may be realised by the use of mechanical gears. The at least one generator may also have the same rotational speed as rotational speed of the rotor, which may be realized by the use of mechanical gears, but may also be a direct-drive generator.

The rotational speed of the rotor has a direct impact on the structural loading of a wind turbine. The rotor comprises one or more blades, which may be pitch controlled, and may rotate as a result of incoming wind. The rotation speed of the rotor may therefore be based at least partly on the incoming wind velocity and air density. The rotor speed may also be decreased if the electrical load on the wind turbine generator is increased, and may also increase if the wind turbine electrical load is decreased. It may also be possible to increase the rotational speed of the rotor, while maintaining an electrical output of a generator.

By a wind turbine support structure is meant a structure in which the nacelle is arranged onto. The wind turbine support structure may comprise a tower structure, which may comprise further tower piece sections, the wind turbine support structure may further comprise a wind turbine foundation which may comprise a platform arrangement.

By sea ice is meant frozen sea water in the ocean. Sea ice may comprise continuous layers that cover large regions. Sea ice may be in type of Pack ice, which are large masses of sea ice not anchored, sea ice may also be drift ice, which are pieces of sea ice. Both pack ice and drift ice may move with ocean currents and wind. Sea ice may also be fast ice, which is where the sea ice is fastened to either the seabed or any other solid object, such as an offshore installation or coastal lines.

It is an advantage to control the wind turbine if the calculated loading of the wind turbine support structure is determined to be above the predetermined loading threshold, in that structural requirements and/or requirements for the penetration of depth into the seabed by the wind turbine support structure in the case of non-floating turbines may be relaxed in areas where occurrence of sea ice is a possibility. Wind turbine support structures are typically designed at a rated design load, which reflects the largest presumed load impact on the wind turbine support structure. Wind turbine support structures designed for cold climate areas, which may be subjected to the formation of sea ice, are therefore designed based on an expected maximum force impact in sea ice situations. The wind turbine support structures may therefore be considered over-dimensioned in times where sea ice loading is low, or non-existent.

It is an advantage to control the wind turbine if the calculated loading of the wind turbine support structure is determined to be above the predetermined loading threshold, in that the wind turbine can operate in a normal operation as long as the wind turbine support structure is not experiencing a loading above a predetermined loading threshold, which may be set based on physical dimensions of the wind turbine support structure and/or the depth of penetration into the seabed by the wind turbine support structure in the case of non-floating support structures.

In one or more embodiments, the loading on the wind turbine support structure is a moment of force applied on the wind turbine support structure.

In one or more embodiments, the step of controlling the wind turbine if the loading on the wind turbine support structure is determined to be above the predetermined loading threshold reduces the wind turbine loading, such that the calculated loading on the wind turbine support structure is reduced to be below the predetermined loading threshold.

It is an advantage to control the wind turbine so as the wind turbine loading is reducing. The sea ice loading is a force of nature, which may require major structural changes on the wind turbine support structure to mitigate. The wind turbine loading however, may be reduced with the use of actuators already present in a wind turbine. The loading on the wind turbine support structure is based at least partly on the sea ice loading and the wind turbine loading. Reducing the wind turbine loading by controlling the wind turbine may therefore reduce the loading on the wind turbine support structure.

In one or more embodiments, the one or more first parameters comprise at least a parameter related to an ambient temperature, a sea ice thickness, a sea ice velocity, and/or a presence of sea ice.

It is advantageous for the one or more first parameters to comprise at least a parameter related to an ambient temperature, a sea ice thickness, a sea ice velocity, and/or a presence of sea ice, in that these parameters are related to the potential load impact of the sea ice. The sea ice loading may therefore be possible to calculate, and in result, to be a contributing factor of the operation of the wind turbine.

In one or more embodiments, the one or more first parameters are obtained by one or more first sensors.

It is an advantage to obtain the one or more first parameters by one or more first sensors, in that the parameters may be sent to a controller for further processing without human interaction. The access to information may also be available in periods where direct measurements taken by a human worker positioned locally is difficult. This may e.g. be during high wind periods, or simply in periods where the presence of human workers is not planned, such as in between planned service.

A further advantage of obtaining the one or more first parameters by one or more first sensors is that the data may result in parameters obtained with substantially identical prerequisites. The parameters obtained from different periods of times may therefore be more comparable and reliable compared to parameters not obtained by sensors, e.g. parameters obtained from human workers, which may and may not be the same persons obtaining the parameters from one time period to the other.

In one or more embodiments, the one or more first sensors are selected from a radar, a camera, a satellite, a capacitive sensor, such as a bi-polar capacitive sensor, a temperature sensor, an anemometer comprising a temperature sensor, vibration sensor, such as an accelerometer, a strain sensor, or any combinations thereof.

In one or more embodiments, the first strain sensor is selected from a first strain-gauge based strain sensor, a first encoder-based strain sensor, a first optics-based strain sensor, or combinations thereof.

By encoder-based strain sensor is meant a component which measures the stress/strain on the element in which the sensor is arranged onto, by detecting deflections via an encoder, and calculating a stress/strain based on the detected deflections, or to send the deflections to a controller which calculated a stress/strain based on the detected deflections.

By an optics-based strain sensor is meant a component which measures stress/strain on the element in which the sensor is arranged onto by optic measurements, such as by applying Fibre Bragg gratings. The sensors may calculate a stress/strain based on the measurements made by the sensor, or to send the measurements to a controller which calculated a stress/strain based on the measurements made by the sensor.

It is an advantage for the first strain sensor to be an optics-based strain sensor, in that fibre optic are unaffected by Electromagnetic interference and noise. This may be a significant advantage if the optic-based strain sensors are arranged within one or more blades of the wind turbine, as wind turbine blades may be significantly exposed to lightning strikes. A down conductor, which is a conductor diverting incoming lightning strikes to ground potential, may carry very large currents, such as above 10kA, such as above 30kA, such as above 60kA or even higher, which may generate large electromagnetic fields in the area where the down conductor is present. This electromagnetic field may destroy or disrupt the readings made by a non-optics-based sensor, or even worse, introduce an induced voltage and/or current that may be conducted further into the control system of a wind turbine via the non-optics-based sensor. Lightning strikes also have a very large rise time, which may further increase the possibility of EMI.

In one or more embodiments, the one or more first sensors are positioned on the wind turbine support structure and/or the wind turbine.

It is an advantage to position the one or more first sensors on the wind turbine support structure and/or the wind turbine, in that the one or more first parameters relating to the sea ice loading are measured locally. Measuring the one or more first parameters locally decreases the number of factors that negatively affects the accuracy of the performance of the one or more first sensors.

In one or more embodiments, the one or more second parameters are obtained by one or more second sensors.

It is an advantage to obtain the one or more second parameters by one or more second sensors, in that the parameters may be sent to a controller for further processing without human interaction. The access to information may also be available in periods where direct measurements taken by a human worker positioned locally is difficult. This may e.g. be during high wind periods, or simply in periods where the presence of human workers is not planned, such as in between planned service.

A further advantage of obtaining the one or more second parameters by one or more second sensors is that the data may result in parameters obtained with substantially identical prerequisites. The parameters obtained from different periods of times may therefore be more comparable and reliable compared to parameters not obtained by sensors, e.g. parameters obtained from human workers, which may and may not be the same persons obtaining the parameters from one time period to the other.

In one or more embodiments, the one or more second sensors are selected from a strain sensor, a force sensor, a vibration sensor, such as an accelerometer, a gyroscope, or any combinations thereof.

In one or more embodiments, the second strain sensor is selected from a second strain-gauge based strain sensor, a second encoder-based strain sensor, a second optics-based strain sensor, or combinations thereof.

It is an advantage for the second strain sensor to be an optics-based strain sensor, in that fiber optic are unaffected by Electromagnetic interference and noise. This may be a significant advantage if the optic-based strain sensors are arranged within one or more blades of the wind turbine, as wind turbine blades may be significantly exposed to lightning strikes. A down conductor, which is a conductor diverting incoming lightning strikes to ground potential, may carry very large currents, such as above 10kA, such as above 30kA, such as above 60kA or even higher, which may generate large electromagnetic fields in the area where the down conductor is present. This electromagnetic field may destroy or disrupt the readings made by a non-optics-based sensor, or even worse, introduce an induced voltage and/or current that may be conducted further into the control system of a wind turbine via the non-optics-based sensor. Lightning strikes also have a very large rise time, which may further increase the possibility of EMI.

In one or more embodiments, the one or more second sensors are positioned in a hub of the wind turbine, in one or more blades of the wind turbine, in a nacelle of the wind turbine, in the support structure the wind turbine, such as in a tower structure of the support structure of the wind turbine or any combinations thereof.

It is an advantage to position the one or more second sensors in a hub of the wind turbine, in one or more blades of the wind turbine, in a nacelle of the wind turbine, in a tower structure of the wind turbine, or any combinations thereof, in that the one or more second parameters relating to the wind turbine loading are measured locally. Measuring the one or more second parameters locally decreases the number of factors that negatively affects the accuracy of the performance of the one or more second sensors.

In one or more embodiments, the calculated loading on the wind turbine support structure includes multiplying a distributed force based on the one or more first- and second parameters with a relative distance to the wind turbine support structure.

In one or more embodiments, the calculated loading on the wind turbine support structure is obtained by multiplying the structural loading of the wind turbine created by the wind force with a first distance from a first location of the structural loading of the wind turbine created by the wind force to a root end of the wind turbine support structure, hereby obtaining a first moment and multiplying the sea ice loading with a second distance from a second location of the sea ice loading to the root end of the wind turbine, hereby obtaining a second moment, and adding the first- and second moment to obtain the calculated loading.

In one or more embodiments, the predetermined loading threshold is a loading value between 50% and 100% of a rated maximum loading value of the wind turbine support structure, such as between 60% and 100%, such as between 70% and 100%, such as between 80% and 100%, such as between 90% and 100%, such as between 95% and 100%, such as between 98% and 100%, or such as 100% of a rated maximum loading value of the wind turbine support structure.

By rated maximum loading value of the wind turbine support structure is meant a loading value in which the wind turbine support structure is designed to withstand before mechanical failure. The rated maximum loading value of the wind turbine support structure may change during the intended time of life for the wind turbine support structure, such as at least 20 years, such as at least 25 years, such as least 30 years of operation, but may also be a static value throughout the time of life for the wind turbine support structure. Maximum loading value may reflect a maximum instantaneous loading value, but may also reflect an averaged loading value over a time period, such as within one hour, or within one day, or within one month.

In one or more embodiments, the wind turbine comprises a turbine controller.

By a turbine controller is meant a computing device capable to control one or more processes of the wind turbine. The one or more processes may be controlling one or more operational parameters, receiving one or more controlling instructions from external communication, computing data, which may and may not be related to the operation of the turbine, communication.

In one or more embodiments, the sea ice loading and/or the wind turbine loading are estimated by the turbine controller.

In one or more embodiments, the calculated loading on the wind turbine support structure is calculated by the turbine controller.

It is an advantage to calculate the loading on the wind turbine support structure with the turbine controller, in that the calculations are performed locally in the wind turbine of interest. The wind turbine may therefore still utilize the calculated loading on the wind turbine support structure during communication outages, where the calculations performed remotely may have failed to reach the wind turbine.

In one or more embodiments, the wind turbine is controlled by the turbine controller.

In one or more embodiments, the operational parameters comprise one or more of the following, a rotational speed of a rotor of the wind turbine, a power output of the wind turbine, and a yaw angle of the wind turbine.

In one or more embodiments, the rotational speed is increased in accordance with the determination that the calculated loading on the wind turbine support structure is above the predetermined loading threshold.

It is an advantage to increase the rotational speed in accordance with the determination that the calculated loading on the wind turbine support structure is above the predetermined loading threshold, in that the wind turbine loading decreases as the rotational speed increases.

In one or more embodiments, the increased rotational speed of the wind turbine does not increase the power output of the wind turbine.

By power output is meant a portion of the electrical energy generated by the wind turbine which may be exported out of the wind turbine, such as to a grid interface or another export cable, but may also be a portion of the electrical energy generated by the wind turbine which may be stored in an energy storage device. The energy storage device may be positioned within the wind turbine or the wind turbine support structure, but may also be positioned elsewhere.

It is an advantage to not increase the power output of the wind turbine as the rotational speed is increased, in that a larger portion of the energy yield from the wind may be utilized to increase the rotational speed of the rotor. Increasing the rotational speed of the rotor may therefore decrease the wind turbine loading, which may result in a stationary power output of the wind turbine compared to the power output when the loading on the wind turbine support structure is determined to be below or at the predetermined loading threshold. A decreased wind turbine loading may result in a decreased loading on the wind turbine support structure, which may relax the dimensional requirements of the wind turbine support structure.

In one or more embodiments, the power output of the wind turbine is decreased in accordance with the determination that the calculated loading on the wind turbine support structure is above the predetermined loading threshold.

It is an advantage to decrease the power output of the wind turbine as wind turbine loading may be decreased due to less energy being yielded from incoming wind of the rotor of the wind turbine. A decreased wind turbine loading may result in a decreased loading on the wind turbine support structure, which may relax the dimensional requirements of the wind turbine support structure.

In one or more embodiments, the power output of the wind turbine is decreased by pitching one or more blades arranged on the wind turbine.

It is an advantage to decrease the power output of the wind turbine by pitching one or more blades arranged on the wind turbine, in that pitching one or more blades decreases loading on the rotor, which results in the wind turbine loading being decreased.

It is another advantage to decrease the power output of the wind turbine by pitching one or more blades arranged on the wind turbine, in that one or more blades being pitched decreases the wake effect generated by the rotor, as the incoming air on the rotor is less disrupted by the rotor. A decreased wake effect may reduce the negative effect a non-decreased wake effect of a non-pitched rotor may have on another wind turbine positioned in the wind direction behind the wind turbine. The other wind turbine may therefore have an improved power output, as the incoming wind on the other wind turbine is improved.

In one or more embodiments, the one or more blades are pitched by an actuator, such as a pitch actuator, such as a hydraulic pitch cylinder.

In one or more embodiments, the power output of the wind turbine is stopped and the wind turbine is shut down.

By stopping the wind turbine is meant to stop the power generation by converting wind energy to electrical energy.

By shutting down the wind turbine is meant to stop generating power from the wind. The rotor of a stopped wind turbine may have a pitch angle at an angle where little to no energy from the wind is yielded by the rotor. The rotor may be locked to the nacelle, but may also be freely moving.

It is an advantage to stop the wind turbine, in that the wind turbine loading of the wind turbine is decreased. A decreased wind turbine loading may result in a decreased loading on the wind turbine support structure.

In one or more embodiments, the yaw angle is increased in relation to a wind direction approaching the wind turbine to introduce a yaw misalignment angle between the wind direction and the wind turbine.

By yaw angle is meant an azimuth angle of the rotor installed on the nacelle of the wind turbine in relation to a tower structure of the wind turbine.

By yaw misalignment angle is meant the difference between the azimuth angle of the wind direction and the azimuth angle of the rotor installed on the nacelle of the wind turbine in relation to a tower structure of the wind turbine.

It is an advantage of the wind turbine to introduce a yaw misalignment angle between the wind direction and the wind turbine, as a yaw misalignment angle results in a decreased rotor area perpendicular to the wind direction. A decreased rotor area may result in a decreased energy yield from the wind, hence a lower wind turbine loading. A decreased rotor area may also reduce the wake effects generated by the wind turbine.

A decreased wake effect may reduce the negative effect a non-decreased wake effect of a non-pitched rotor may have on another wind turbine positioned in the wind direction behind the wind turbine. The other wind turbine may therefore have an improved power output, as the incoming wind on the other wind turbine is improved.

In one or more embodiments, the yaw misalignment angle is between 45 and 135 degrees, such as between 60 and 120 degrees, such as between 70 and 110 degrees, such as between 75 and 105 degrees, such as between 75 and 90 degrees, such as between 80 and 90 degrees, such as 90 degrees.

By a degree is meant angular degrees which range from 0 to 360 degrees for a full circle.

In a second aspect of the invention is disclosed a system for controlling a loading on a wind turbine support structure, the wind turbine support structure comprising a wind turbine, wherein the system comprises one or more first sensors configured for measuring one or more first parameters, wherein the one or more first parameters are related to sea ice, one or more second sensors configured for measuring one or more second parameters, wherein the one or more second parameters are related to structural loading of the wind turbine created by a wind force, and a turbine controller, wherein the turbine controller is configured to receive one or more first parameters, receive one or more second parameters, estimate a sea ice loading based on the received one or more first parameters, estimate a wind turbine loading based on the received one or more second parameters, calculate a loading on the wind turbine support structure, wherein the calculation is based on a combination of the estimated sea ice loading and the estimated wind turbine loading, in accordance with a determination that the calculated loading on the wind turbine support structure is above a predetermined loading threshold, adjusting wind turbine operational parameters.

In accordance with a determination that the calculated loading on the wind turbine support structure is within a predetermined loading threshold, forgoing adjusting the wind turbine operational parameters.

In one or more embodiments, the one or more first sensors are any one of; a radar, a camera, a satellite, a capacitive sensor, such as a bi-polar capacitive sensor, a temperature sensor, an anemometer comprising a temperature sensor, or any combinations thereof.

In one or more embodiments, the one or more first sensors are positioned on the wind turbine support structure and/or the wind turbine.

In one or more embodiments, the one or more second sensors are any of; a strain sensor, a force sensor, a vibration sensor, such as an accelerometer in one or more directions, or a gyroscope or any combinations thereof.

In one or more embodiments, the strain sensor is a strain-gauge based strain sensor, an encoder-based strain sensor, an optics-based strain sensor, or combinations thereof.

In one or more embodiments, the one or more second sensors are positioned in a hub of the wind turbine, in one or more blades of the wind turbine, in a nacelle of the wind turbine, in a tower structure of the wind turbine, or any combinations thereof.

In one or more embodiments, the wind turbine comprises an interface between the nacelle and the tower structure, such as a yaw ring, one or more yaw motors arranged at the interface, wherein the one or more yaw motors are configured for increasing or decreasing a yaw angle, and wherein the yaw angle is increased in relation to a wind direction approaching the wind turbine to introduce a yaw misalignment angle between the wind direction and the wind turbine.

In one or more embodiments, the yaw misalignment angle is between 45 and 135 degrees, such as between 60 and 120 degrees, such as between 70 and 110 degrees, such as between 75 and 105 degrees, such as between 75 and 90 degrees, such as between 80 and 90 degrees, such as 90 degrees.

In one or more embodiments the system described in the second aspect of the invention and any embodiments thereof is configured for performing the method described in the first aspect of the invention and any embodiments thereof.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisages all possible combinations and permutations of the described embodiments.

The above objects, as well as additional objects, features and advantages of the present disclosure will be more fully appreciated by reference to the following illustrative and non-limiting detailed description of example embodiments of the present disclosure, when taken in conjunction with the accompanying drawings.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

### Brief description of the drawings

- Fig. 1: shows an exemplary implementation of an aspect of the invention;
- Fig. 2: shows a wind turbine in sea ice conditions;
- Fig. 3: shows an exemplary system architecture of an aspect of the invention; and
- Fig. 4: shows a wind turbine with an exemplary implementation of an aspect of the invention.

### Detailed description of the drawings

Various examples are described hereinafter with reference to the figures. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

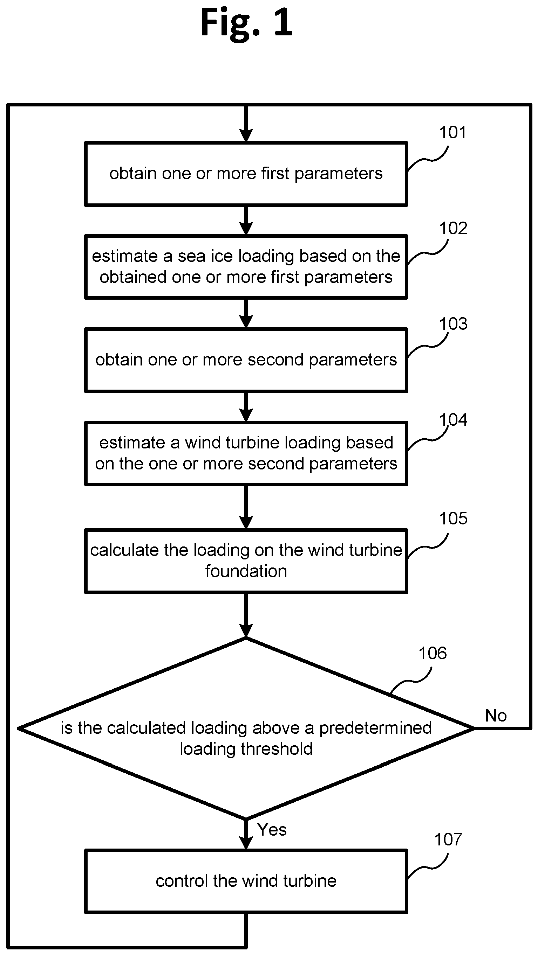

Fig. 1 describes an exemplary implementation of an aspect of the invention, wherein the loading on the wind turbine support structure may be reduced by implementing a set of processes. Fig. 1 illustrates the set of processes by a flowchart comprising a step of obtaining one or more first parameters 101, wherein the one or more first parameters are related to sea ice. These parameters may be any parameters that may be utilized to determine a sea ice loading, such as ambient temperature, presence of a formation of sea ice and/or the velocity of incoming sea ice, but may also be a combination of the listed or other parameters related to sea ice. These parameters may be obtained by sensors, such as any sensors appropriate for measuring the listed parameters, such as an anemometer, a temperature sensor, a camera, radar, or any other suitable sensor for measuring said parameters. The parameters may be measured by a human worker. at the location or remote, but may also be measured autonomously. The step of obtaining one or more first parameters 101 is followed by the step of estimating a sea ice loading based on the obtained one or more first parameters 102, wherein a sea ice loading is calculated based on the one or more first parameters. Subsequently or simultaneously is one or more second parameters obtained in the step of obtaining one or more second parameters 103. The one or more second parameters may be any parameters that may be utilized to calculate a wind turbine loading. This may be the wind speed, the wind density, measured force and/or strain on any one or more of the structural elements of the wind turbine, such as the blades, or a combination thereof. These parameters may be obtained by sensors, such as any sensors appropriate for measuring the listed parameters, such as an anemometer, a temperature sensor, a strain sensor, or any other suitable sensor for measuring said parameters. The parameters may be measured by a human worker at the location or remote, but may also be measured autonomously. After the one or more second parameters are obtained, is a wind turbine loading estimated based on the one or more second parameters in the step of estimating a wind turbine loading based on the one or more second parameters 104. The step of estimating a sea ice loading based on the obtained one or more first parameters 102 and the step of estimating a wind turbine loading based on the one or more second parameters 104 may be performed by a controller, which may be a turbine controller, but may also be a remote controller communication with the wind turbine. The estimated sea ice loading and wind turbine loading is the contributing to the calculating of the loading on the wind turbine support structure in the step of calculating the loading on the wind turbine support structure 105, wherein the step of calculating the loading on the wind turbine support structure 105 may be performed by the same controller as the one performing the actions specified by the step of estimating a sea ice loading based on the obtained one or more first parameters 102 and the step of estimating a wind turbine loading based on the one or more second parameters 104, but may also be performed by another controller communication with a controller that performs the actions specified by the step of estimating a sea ice loading based on the obtained one or more first parameters 102 and the step of estimating a wind turbine loading based on the one or more second parameters 104. The controller calculating the loading of the wind turbine loading thereafter determines whether the calculating loading is above a predetermined loading threshold in the step of determining if the calculating loading is above a predetermined loading threshold 106. The predetermined threshold may be based on properties of the wind turbine support structure, such as the physical dimensions and/or the penetration depth, which may reflect a maximum allowable loading impact on the wind turbine support structure. If the step of determining if the calculating loading is above a predetermined loading threshold 106 results in a result reflecting that the calculated loading is above the predetermined loading threshold, then control measures on the wind turbine is performed, as reflected by the step of controlling the wind turbine 107. The control measures may be implemented directly by the controller performing the actions specified by the steps of calculating the loading on the wind turbine foundation 105 and/or determining if the calculated loading is above a predetermined loading threshold 106, or sent to the controller performing the actions specified by the steps of estimating a sea ice loading based on the obtained one or more first parameters 102 and/or estimating a wind turbine loading based on the one or more second parameters 104, or a different controller not performing any one of the previous steps described in Fig. 1, or a controller performing all of the previous steps described in Fig. 1. The process then subsequently restarts with the step of obtaining one or more first parameters 101. The step of obtaining one or more second parameters 103 may start simultaneously with the step of obtaining one or more first parameters 101. If the step of determining if the calculating loading is above a predetermined loading threshold 106 results in a result reflecting that the calculated loading is at or below the predetermined loading threshold, then the process restarts with step of obtaining one or more first parameters 101. The step of obtaining one or more second parameters 103 may start simultaneously with the step of obtaining one or more first parameters 101.

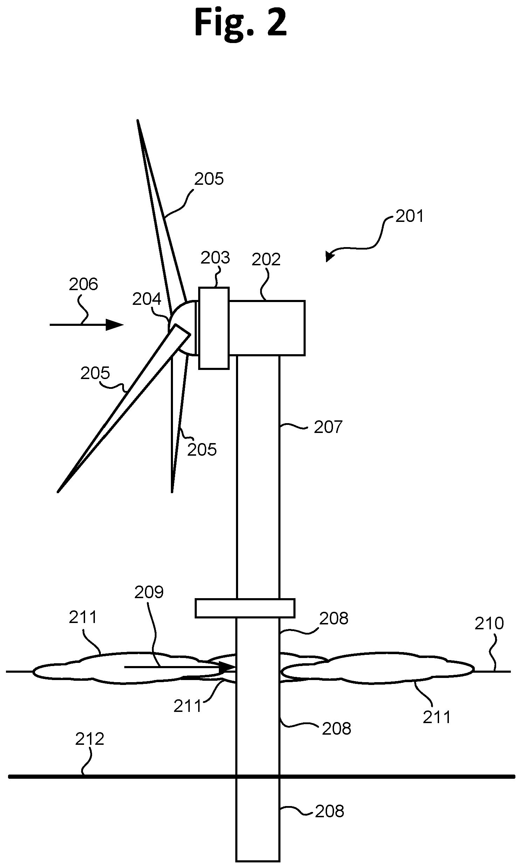

Fig. 2 describes a wind turbine 201 in sea ice 211 conditions. The wind turbine 201 comprises a nacelle 202, a generator 203, blades 205 arranged on the hub 204, also called a rotor, and a wind turbine support structure comprising a tower structure 207 and a wind turbine foundation 208. The depicted wind turbine 201 is an offshore wind turbine 201, which is installed in the water 210 by the wind turbine foundation 208, wherein the wind turbine foundation 208 is penetrated into the sea bed 212. The wind turbine 201 may be subjected to a wind turbine loading based on at least an incoming wind 206. The wind turbine loading may be estimated by one or more second sensors installed in the wind turbine 201, such as in one or more of the blades 205. The wind turbine 201 may be subjected to additional load in the form of sea ice loading 209 generated by impacting sea ice 211 located near or at a part of the wind turbine foundation 208. The load by the at least the wind turbine loading and the sea ice loading 209 introduce thereby introduce a combined loading on the wind turbine support structure.

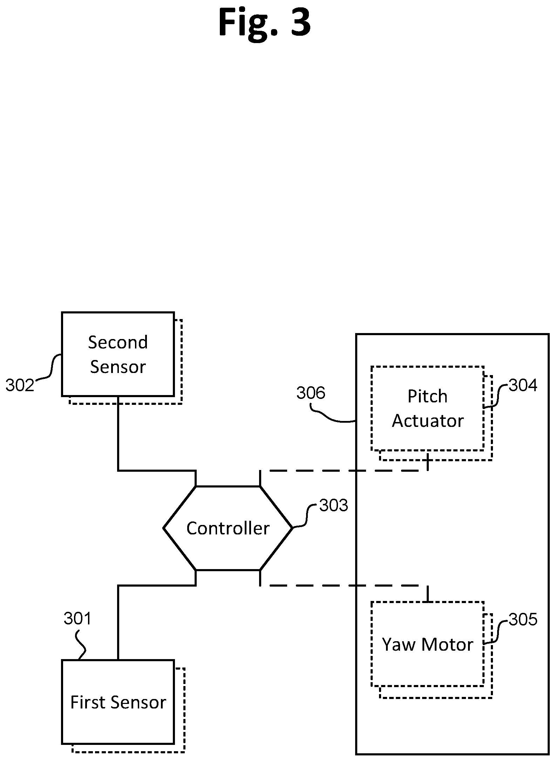

Fig. 3 describes an exemplary system architecture of an aspect of the invention comprising one or more first sensors 301, one or more second sensors 302, and a controller 303. The controller 303 receives one or more first parameters by the one or more first sensors 301 and one or more second parameters by the one or more second sensor 302. The controller may be installed in the wind turbine comprising the first- and second sensors 301, 302, but may also be located remotely. The controller may have interfaces to control components of the wind turbine 306, such as one or more pitch actuators 304 and one or more yaw motors 305, which it may control the operation of. The operation of the one or more blades via the pitch actuators 304 and the operation of the yaw motors 305 may be modified by the controller 303 based on calculated loading on the wind turbine loading as previously described in Fig. 1. Fig. 3 only illustrates the possibility to control the pitch actuators 304 and the yaw motors 305 of the wind turbine 306, other components controlling the operation of the wind turbine 306 may however also be controlled, such as a converter, an energy storage device, a generator, or any other components affecting the operational parameters of the wind turbine 306.

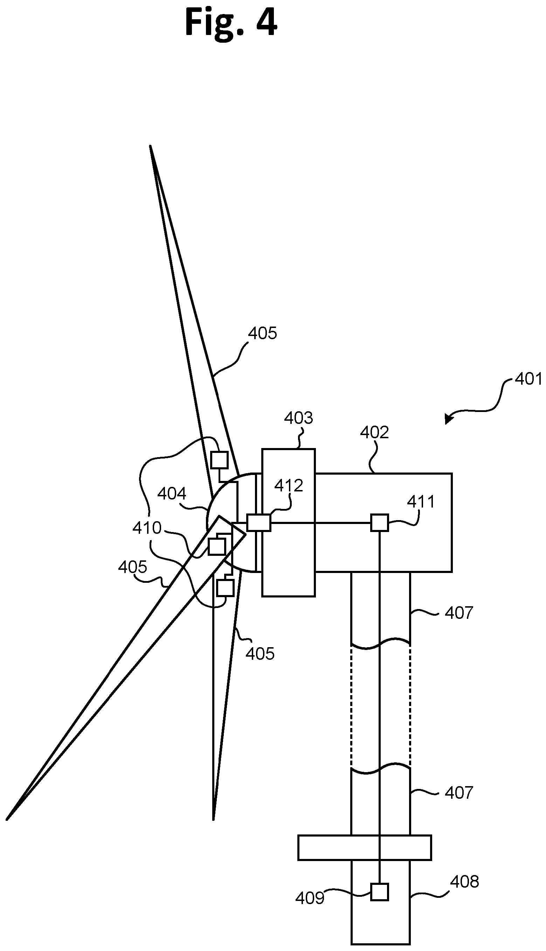

Fig. 4 describes a wind turbine 404 with an exemplary implementation of an aspect of the invention, comprising a nacelle 402, a generator 403, blades 405 arranged on the hub 404, also called a rotor, wherein each blade 405 comprises a second sensor 410, a support structure comprising a tower structure 407 and a wind turbine foundation 408, the wind turbine foundation 408 comprising a first sensor 409. The second sensors 410 are interconnected to a turbine controller 411 via a slip ring 412. The connection between the second sensors 410 and the turbine controller 411 is realized via a slip ring 412 to enable a cabled connection. A cabled connection without the slip ring 412 may result in an eventual over-twist and failure of the cables connecting second sensors 410 and the turbine controller 411. The first sensor 409 is connected illustrated in Fig. 4 as being directly connected to the turbine controller 411 without any mitigation of yaw movements, but could also have been implemented with a slip ring. The connection between the second sensor 410 and the turbine controller 411 and/or between the first sensor 409 and the turbine controller 411 is described as realized by the use of cables, but may alternatively be implemented with wireless connection.

### References

101 Step of obtaining one or more first parameters
102 Step of estimating a sea ice loading based on the obtained one or more first parameters
103 Step of obtaining one or more second parameters
104 Step of estimating a wind turbine loading based on the one or more second parameters
105 Step of calculating the loading on the wind turbine support structure
106 Step of determining if the calculated loading is above a predetermined loading threshold
107 Step of controlling the wind turbine
201 Wind turbine
202 Nacelle
203 Generator
204 Hub
205 Blades
206 Wind
207 Tower structure
208 Foundation
209 Sea ice loading
210 Water
211 Sea ice
212 Sea bed
301 First sensor
302 Second sensor
303 Controller
304 Pitch controller
305 Yaw motor
306 Wind turbine
401 Wind turbine
402 Nacelle
403 Generator
404 Hub
405 Blades
406 Wind
407 Tower structure
408 Foundation
409 First sensor
410 Second sensor
411 Controller
412 Slip ring

## Claims

1. A method of controlling a loading on a wind turbine support structure, the wind turbine support structure comprising a wind turbine (201, 401), wherein the method of controlling the loading comprises the following steps:
obtaining (103) one or more wind force parameters, wherein the one or more wind force parameters are related to structural loading of the wind turbine (201, 401) created by a wind force; and
estimating (104) a wind turbine loading based on the one or more wind force parameters;
wherein the method of controlling the loading is **characterized in** the following steps:
obtaining (101) one or more sea ice parameters related to sea ice;
estimating (102) a sea ice loading based on the obtained one or more sea ice parameters;
calculating (105) the loading on the wind turbine support structure, wherein the calculation is based on a combination of the sea ice loading and the wind turbine loading;
in accordance with a determination (106) that the calculated loading on the wind turbine support structure is above a predetermined loading threshold, adjusting (107) wind turbine operational parameters.

2. The method of controlling a loading according to claim 1, wherein the loading on the wind turbine support structure is a moment of force applied on the wind turbine support structure.

3. The method of controlling a loading according to claim 1 or 2, wherein the step of adjusting (107) wind turbine operational parameters is performed such that the calculated loading on the wind turbine support structure is reduced to be below the predetermined loading threshold.

4. The method of controlling a loading according to any one of the preceding claims, wherein the one or more sea ice parameters comprises at least a parameter related to an ambient temperature, a sea ice thickness, a sea ice velocity, and/or a presence of sea ice.

5. The method of controlling a loading according to any one of the preceding claims, wherein the one or more sea ice parameters are obtained by one or more sea ice sensors (301, 409).

6. The method of controlling a loading according to any one of the preceding claims, wherein the one or more second parameters are obtained by one or more wind force sensors (302, 410).

7. The method of controlling a loading according to any one of the preceding claims, wherein the predetermined loading threshold is a loading value between 50% and 100% of a rated maximum loading value of the wind turbine support structure, such as between 60% and 100%, such as between 70% and 100%, such as between 80% and 100%, such as between 90% and 100%, such as between 95% and 100%, such as between 98% and 100%, or such as 100% of a rated maximum loading value of the wind turbine support structure.

8. The method of controlling a loading according to any one of the preceding claims, wherein the wind turbine (201, 401) comprises a turbine controller (303, 411), wherein the turbine controller (303, 411) is configured to;
estimate the sea ice loading and/or the wind turbine loading,
calculate the calculated loading on the wind turbine support structure, and
control the wind turbine.

9. The method of controlling a loading according to any one of the preceding claims, wherein the operational parameters comprise one or more of the following, a rotational speed of a rotor of the wind turbine, a power output of the wind turbine, and a yaw angle of the wind turbine.

10. The method of controlling a loading according to claim 9, wherein the rotational speed is increased in accordance with the determination that the calculated loading on the wind turbine support structure is above the predetermined loading threshold, and wherein the increased rotational speed of the wind turbine does not increase a power output of the wind turbine.

11. The method of controlling a loading according to claim 9, wherein the power output of the wind turbine is decreased in accordance with the determination that the calculated loading on the wind turbine support structure is above the predetermined loading threshold.

12. The method of controlling a loading according to claim 11, wherein the power output of the wind turbine is stopped and the wind turbine is shut down.

13. A system for controlling a loading on a wind turbine support structure, the wind turbine support structure comprising a wind turbine (201, 401), wherein the system comprises:
one or more wind force sensors (302, 410) configured for measuring one or more wind force parameters, wherein the one or more wind force parameters are related to structural loading of the wind turbine created by a wind force; and
a turbine controller (303, 411) configured to:
receive the one or more wind force parameters, and
estimate a wind turbine loading based on the received one or more wind force parameters;
the system being **characterized in**:
**that** it further comprises one or more sea ice sensors (301, 409) configured for measuring one or more sea ice parameters; and
**that** the turbine controller (303, 411) is further configured to:
receive the one or more sea ice parameters,
estimate a sea ice loading based on the received one or more sea ice parameters,
calculate a loading on the wind turbine support structure, wherein the calculation is based on a combination of the estimated sea ice loading and the estimated wind turbine loading, and
in accordance with a determination that the calculated loading on the wind turbine support structure is above a predetermined loading threshold, adjusting wind turbine operational parameters.

14. The system according to of claim 13, wherein the one or more sea ice sensors (301, 409) are positioned on the wind turbine support structure and/or the wind turbine.

15. **The** system according to claim 13 or 14, wherein the one or more wind force sensors (302, 410) are positioned in a hub (204, 404) of the wind turbine, in one or more blades (205, 405) of the wind turbine, in a nacelle (202, 402) of the wind turbine, in a tower structure (207, 407) of the wind turbine, or any combinations thereof.
